# EUROPÄISCHE PATENTSCHRIFT

(11) **EP 1 291 101 B1**
(45) Veröffentlichungstag und Bekanntmachung des Hinweises auf die Patenterteilung: **24.05.2006**
(21) Anmeldenummer: 02019870.1
(22) Anmeldetag: 10.09.2002
(51) Int. Cl.: B23B 3/16, B23B 3/22, B23Q 16/10, B23Q 5/04

(54) **Werkzeugmaschine mit Werkstückspindel und Mehrfachwerkzeugträger**
Machine tool with workpiece spindle and multitool holder
Machine-outil avec broche porte-pièce et porte-outil multiple

(30) Priorität: 10.09.2001 DE 10145672
(43) Veröffentlichungstag der Anmeldung: 12.03.2003
(73) Patentinhaber: Index-Werke GmbH & Co. KG Hahn & Tessky, 73730 Esslingen (DE)
(72) Erfinder: HAFLA, Dietmar Franz Dipl.-Ing., 73666 Hohengehren (DE); SCHÖN, Markus Dipl.-Ing., 73614 Schorndorf (DE); HILLE, Jürgen, 72622 Nürtingen (DE)
(74) Vertreter: Hoeger, Stellrecht & Partner Patentanwälte

(56) Entgegenhaltungen:
- WO-A-96/24456
- DE-A- 19 528 404
- DE-A- 19 838 505

## Beschreibung

Die Erfindung betrifft eine Werkzeugmaschine nach dem Oberbegiff des Anspurchs 1 wie sie, z.B., aus DE-195 28 404-A bekannt ist.

Derartige Werkzeugmaschinen sind aus dem Stand der Technik bekannt, wobei die Mehrfachwerkzeugträger üblicherweise als Revolver ausgebildet sind, deren Revolverkopf relativ zu einem Revolvergehäuse drehbar ist.

Ausgehend von diesem Stand der Technik liegt die Erfindung die Aufgabe zugrunde, eine Werkzeugmaschine der gattungsgemäßen Art derart zu verbessern, daß in möglichst einfacher Art und Weise unterschiedlichste Bearbeitungen eines Werkstücks realisierbar sind.

Diese Aufgabe wird durch eine Werkzeugmaschine nach Anspruch 1 gelöst.

Prinzipiell wäre es denkbar, die Werkzeuge relativ zueinander mit unterschiedlicher Ausrichtung anzuordnen. Eine besonders günstige Lösung sieht jedoch vor, daß die Werkzeuge in den Werkzeugpositionen mit ungefähr paralleler Ausrichtung zueinander angeordnet sind, da diese Lösung den Steuerungsaufwand beim Einsetzen unterschiedlicher Werkzeuge vereinfacht.

Unter einer Ausrichtung der Werkzeuge im Sinne der erfindungsgemäßen Lösung ist dabei die Richtung zu verstehen, in welcher das Werkzeug arbeitet.

Bei einem rotierend angetriebenen Werkzeug ist die Ausrichtung festgelegt durch die Rotationsachse. Bei einem stationären Werkzeug ist die Ausrichtung festgelegt durch die Schneidengeometrie, und zwar der durch die Ausrichtung der Schneidkante vorgesehene Vorschubrichtung bei in das Werkstück eingreifender Schneide.

Um die Werkzeuge in den Werkzeugpositionen in geeigneter Art und Weise aufnehmen zu können, sind vorzugsweise in den Werkzeugpositionen Werkzeugaufnahmen vorgesehen, in welche die Werkzeuge in einer Einsetzrichtung einsetzbar sind.

Hinsichtlich der Anordnung der Werkzeugpositionen sind die unterschiedlichsten Möglichkeiten denkbar.

So können die Werkzeugpositionen beispielsweise gestaffelt am Werkzeugträger angeordnet sein.

Eine besonders vorteilhafte Lösung sieht vor, daß die Werkzeugpositionen in einer parallel zur Schwenkachse verlaufenden Fläche angeordnet sind.

Die Fläche kann prinzipiell gekrümmt sein. Besonders günstig ist es jedoch, wenn die Fläche eine ebene Fläche ist.

Hinsichtlich der Anordnung der Werkzeugaufnahmen relativ zu der Fläche ist es besonders vorteilhaft, wenn die Werkzeugaufnahmen so angeordnet sind, daß die Werkzeuge in alle Werkzeugaufnahmen in einer quer zur Fläche verlaufenden Einsetzrichtung einsetzbar sind, so daß damit ein einfacher Werkzeugwechsel realisierbar ist.

Ferner ist es hinsichtlich der Ausrichtung der Werkzeuge relativ zu der Fläche besonders günstig, wenn die in die Werkzeugaufnahmen eingesetzten Werkzeuge eine quer zu der Fläche verlaufende Ausrichtung aufweisen, die gegenüber der Fläche geneigt sein kann, vorzugsweise jedoch senkrecht zu dieser verläuft.

Prinzipiell wäre es denkbar, die Werkzeugpositionen in einem beliebigen räumlichen Muster oder einem beliebigen Flächenmuster am Werkzeugträger anzuordnen.

Eine besonders günstige Lösung sieht vor, daß der Werkzeugträger mindestens zwei nebeneinander verlaufende Reihen von Werkzeugpositionen aufweist.

Beim Vorsehen von mindestens zwei Reihen von Werkzeugpositionen ist vorgesehen, daß diese Reihen vorzugsweise parallel zueinander verlaufen.

Diese Reihen könnten in unterschiedlichsten Richtungen, beispielsweise quer oder schräg zur Schwenkachse verlaufen.

Konstruktiv besonders vorteilhaft läßt sich der erfindungsgemäße Werkzeugträger jedoch dann ausbilden, wenn die mindestens zwei Reihen in Richtung der Schwenkachse verlaufen.

Besonders zweckmäßig läßt sich der erfindungsgemäße Werkzeugträger mit minimalen Verfahrwegen der Werkstückspindel dann einsetzen, wenn zwei der Reihen seitlich versetzt zu einer durch die Schwenkachse verlaufenden Symmetrieebene, insbesondere auf unterschiedlichen Seiten derselben, angeordnet sind. Denn damit besteht die Möglichkeit, die Verfahrwege der Werkstückspindel in Richtung der Schwenkachse möglichst klein zu halten, wenn die Werkzeuge sowohl bei parallel zur Werkstückspindelachse verlaufender Symmetrieebene als auch bei senkrecht zur Werkstückspindelachse verlaufender Symmetrieebene oder in Zwischenstellungen zwischen diesen eingesetzt werden sollen.

Eine derartige Ausbildung von zwei seitlich versetzt zur Symmetrieebene verlaufenden Reihen von beschränkt sich nicht auf das bloße Vorsehen zweier Reihen am Werkzeugträger. Es ist dabei durchaus auch denkbar, drei Reihen oder mehr von Werkzeugpositionen vorzusehen, wobei beispielsweise dann eine Reihe von Werkzeugpositionen von der Symmetrieebene geschnitten wird.

Besonders vorteilhaft ist diese Ausbildung des Werkzeugträgers dann, wenn zwei der Reihen von Werkzeugpositionen symmetrisch zur durch die Schwenkachse verlaufenden Symmetrieebene angeordnet sind.

Hinsichtlich der Ausbildung des Werkzeugträgers wurden bislang keine näheren Angaben gemacht. So sieht ein vorteilhaftes Ausführungsbeispiel vor, daß der Werkzeugträger einen sich in Richtung der Fläche ausdehnenden Werkzeugträgerkörper aufweist und daß auf einer Oberseite des Werkzeugträgerkörpers die Werkzeugpositionen angeordnet sind.

Vorteilhaft ist dabei der Werkzeugträgerkörper so ausgebildet, daß er quer zu der Oberseite eine Erstreckung aufweist, die geringer ist als die Erstreckung in mindestens einer Richtung der Oberseite.

Vorzugsweise ist die Erstreckung des Werkzeugträgerkörpers quer zu der Oberseite geringer als die Erstreckung in beiden Richtungen der Oberseite.

Insbesondere ist die Oberseite des Werkzeugträgerkörpers maximal mit einer geringen Wölbung versehen. Konstruktiv noch vorteilhafter ist es jedoch, wenn die Oberseite flach oder als Ebene ausgebildet ist.

Bei einer besonders vorteilhaften Lösung ist der Werkzeugträgerkörper quaderähnlich ausgebildet.

Da selbst bei Vorsehen von Werkzeugen auf nur einer Flachseite des Werkzeugträgerkörpers ein Drehen desselben um 180° erforderlich ist, da jeweils nur die auf der der Werkstückspindel zugewandten Seite der Schwenkachse angeordneten Werkzeuge in vorteilhafter Weise kollisionsfrei mit dem Werkstück wechselwirken können, während die auf der der Werkstückspindel abgewandten Seite der Schwenkachse angeordneten Werkzeuge nicht eingesetzt werden können, sondern nur durch eine Drehung des Werkzeugträgerkörpers um 180°, ist es, um die Zahl der Werkzeuge möglichst groß zu halten, besonders günstig, wenn der Werkzeugträgerkörper zwei einander gegenüberliegende Oberseiten aufweist, auf welchen Werkzeugpositionen vorgesehen sind.

In diesem Fall sind jeweils die auf der der Werkstückspindel zugewandten Seite der Schwenkachse stehenden Werkzeuge zur Bearbeitung des Werkstücks mit minimaler Kollisionsgefahr einsetzbar, und durch eine Drehung um 180° sind auch dann die zunächst auf der der Werkstückspindel abgewandten Seite der Schwenkachse liegenden Werkzeuge in Einsatz bringbar. Dies gilt sowohl für eine Ausrichtung der Werkzeuge parallel oder senkrecht zur Spindelachse oder auch in beliebigen Zwischenstellungen zwischen diesen.

Beim Vorsehen von Werkzeugpositionen auf gegenüberliegenden Seiten des Werkzeugträgerkörpers wäre es denkbar, die Werkzeugpositionen bei Projektion der beiden Oberseiten aufeinander auf Lücke anzuordnen.

Eine besonders günstige Lösung sieht jedoch vor, daß die Werkzeugpositionen auf den beiden Oberseiten des Werkzeugträgerkörpers spiegelsymmetrisch zu einer Mittelebene des Werkzeugträgerkörpers angeordnet sind.

Um bei dem erfindungsgemäßen Werkzeugträger auch angetriebene Werkzeuge einsetzen zu können, ist vorzugsweise vorgesehen, daß zumindest einem Teil der Werkzeugpositionen Werkzeugspindeln als Werkzeugaufnahmen für angetriebene Werkzeuge zugeordnet sind, mit welchen dann ein Antrieb der angetriebenen Werkzeuge erfolgt.

Vorzugsweise sind dabei die Werkzeugspindeln so ausgebildet, daß sie in Öffnungen des Werkzeugträgerkörpers drehbar gelagerte Spindelhülsen umfassen, über welche dann ein Antrieb der angetriebenen Werkzeuge erfolgt.

Um mit diesen Spindelhülsen ein angetriebenes Werkzeug antreiben zu können, ist vorzugsweise vorgesehen, daß in jede Spindelhülse mindestens von einer Endseite her ein Spindeleinsatz zur Ausbildung einer Werkzeugaufnahme für das angetriebene Werkzeug einer Spindelposition einsetzbar ist.

Eine besonders vorteilhafte Lösung sieht vor, daß der Werkzeugkörper diesen von einer Oberseite zur anderen Oberseite durchsetzende Öffnungen mit einer in jeder Öffnung angeordneten Spindelhülse aufweist und daß in jede Spindelhülse von den gegenüberliegenden Endseiten her Spindeleinsätze zur Ausbildung von Werkzeugaufnahmen einsetzbar sind.

In diesem Fall ist eine Spindelhülse zwei auf gegenüberliegenden Seiten des Werkzeugträgerkörpers vorgesehenen Werkzeugpositionen zugeordnet und erlaubt somit den gleichzeitigen Antrieb der in beiden Werkzeugpositionen zugeordneten Werkzeuge, wobei bei der erfindungsgemäßen Drehmaschine vorzugsweise jeweils nur ein Werkzeug am Werkstück arbeitet, während sich das andere frei mitdreht.

Prinzipiell wäre es vorstellbar, jeder Werkzeugspindel einen eigenen Antrieb zuzuordnen.

Besonders günstig ist es, wenn die Werkzeugspindeln einer Reihe von Werkzeugpositionen miteinander gekoppelt sind, so daß diese durch einen Antrieb antreibbar sind.

Noch besser ist es, wenn alle Werkzeugspindeln des Werkzeugträgers miteinander gekoppelt und gemeinsam antreibbar sind.

Im Fall von im Werkzeugträger vorgesehenen Spindelhülsen ist vorzugsweise vorgesehen, daß die Spindelhülsen durch mindestens ein Antriebselement miteinander gekoppelt sind.

Beispielsweise ist dieses Antriebselement dabei als Zwischenrad zwischen den Spindelhülsen ausgebildet.

Prinzipiell wäre es auch bei Kopplung sämtlicher Werkzeugspindeln denkbar, im Werkzeugträgerkörper einen Antrieb für diese vorzusehen.

Besonders günstig ist es jedoch, wenn die Werkzeugspindeln über einen außerhalb des Werkzeugträgerkörpers angeordneten Antrieb antreibbar sind.

Vorzugsweise erfolgt der Antrieb der Werkzeugspindeln durch eine koaxial zur Schwenkachse verlaufende Antriebswelle.

Um die Zahl der Antriebe möglichst gering zu halten, ist vorzugsweise vorgesehen, daß mit dem Antrieb für die Werkzeugspindel auch die Schwenkbewegung des Werkzeugträgerkörpers antreibbar ist.

Vorzugsweise ist zum Antrieb der Schwenkbewegung des Werkzeugträgerkörpers ein aus- und einkuppelbares Planetengetriebe vorgesehen.

Hinsichtlich der Fixierung des Werkzeugträgerkörpers in den verschiedenen Drehstellungen wurden im Zusammenhang mit der bisherigen Erläuterung der verschiedenen Ausführungsbeispiele keine weiteren Angaben gemacht. So wäre es beispielsweise denkbar, den Werkzeugträgerkörper durch eine kraftschlüssige Fixiereinrichtung in den verschiedenen Schwenkstellungen festzulegen.

Besonders günstig ist es, wenn der Werkzeugträgerkörper mittels einer formschlüssigen Fixiereinrichtung relativ zu einer Werkzeugträgeraufnahme fixierbar ist.

Eine derartige formschlüssige Fixiereinrichtung hat zwar den Nachteil, daß die Zahl der Zwischenstellungen zwischen der Ausrichtung der Werkzeuge parallel und senkrecht zur Schwenkachse nicht unbegrenzt groß, sondern durch die Formschlußelemente begrenzt ist, die formschlüssige Fixiereinrichtung hat jedoch den Vorteil, daß diese eine präzise, vorzugsweise eine hochpräzise Festlegung der Ausrichtung der Werkzeuge in den einzelnen Stellungen erlaubt.

Vorzugsweise ist dabei als formschlüssige Fixiereinrichtung eine Hirthverzahnung, insbesondere eine dreiteilige Hirthverzahnung vorgesehen.

Eine besonders günstige Lösung sieht vor, daß die Fixiereinrichtung mit einer Kupplung für ein Durchführen der Schwenkbewegung des Werkzeugträgers mittels des Antriebs für die Werkzeugspindeln versehen ist, wobei vorzugsweise die Kupplung dann wirksam ist, wenn die Fixiereinrichtung ein Schwenken des Werkzeugträgerkörpers freigibt, während die Kupplung dann inaktiv ist, wenn die Fixiereinrichtung den Werkzeugträgerkörper festlegt.

Weitere Merkmale und Vorteile der Erfindung sind Gegenstand der nachfolgenden Beschreibung sowie der zeichnerischen Darstellung eines Ausführungsbeispiels einer erfindungsgemäßen Drehmaschine, wobei die Art der Bewegung der Werkstückspindel relativ zum Werkzeugträger nicht auf das dargestellte Ausführungsbeispiel der Drehmaschine beschränkt ist.

In der Zeichnung zeigen:
- Fig. 1: einen Schnitt längs Linie 1-1 in Fig. 2 durch eine erfindungsgemäße Werkzeugmaschine;
- Fig. 2: einen Schnitt längs Linie 2-2 in Fig. 1;
- Fig. 3: eine vergrößerte perspektivische Darstellung eines Werkzeugträgers und eines vorderen Teils einer Werkstückspindel mit Werkstück bei der erfindungsgemäßen Drehmaschine;
- Fig. 4: einen Schnitt längs Linie 4-4 in Fig. 1

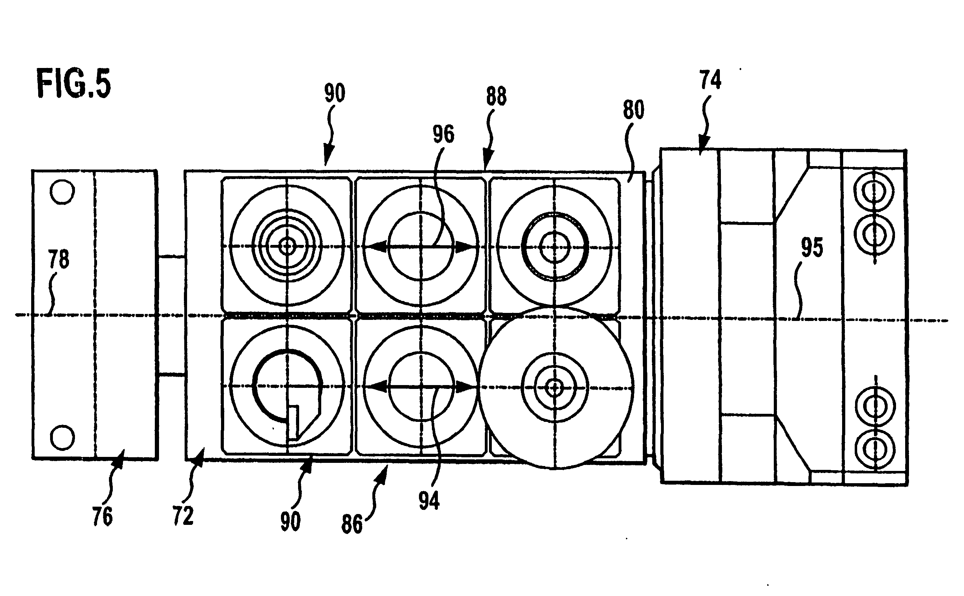

- Fig. 5: eine Draufsicht auf den Werkzeugträger von seiten der Werkstückspindel in Fig. 1;
- Fig. 6: einen Schnitt längs Linie 6-6 in Fig. 7;
- Fig. 7: eine Draufsicht ähnlich Fig. 5 mit teilweise weggebrochenem Werkzeugträgerkörper;
- Fig. 8: eine vergrößerte Darstellung des Schnitts gemäß Fig. 6 im Bereich X;
- Fig. 9: einen Schnitt ähnlich Fig. 4 mit eingesetzten Werkzeugen und einer Ausrichtung der Werkzeuge senkrecht zur Spindelachse;
- Fig. 10: einen Schnitt ähnlich Fig. 9 mit einer Ausrichtung der Werkzeuge in einem spitzen Winkel schräg zur Spindelachse;
- Fig. 11: einen Schnitt ähnlich Fig. 9 mit Ausrichtung der Werkzeuge parallel zur Spindelachse und
- Fig. 12: einen Schnitt ähnlich Fig. 9 mit Ausrichtung der Werkzeuge senkrecht zur Spindelachse sowie mit zwei angetriebenen und zwei nicht angetriebenen Werkzeugen.

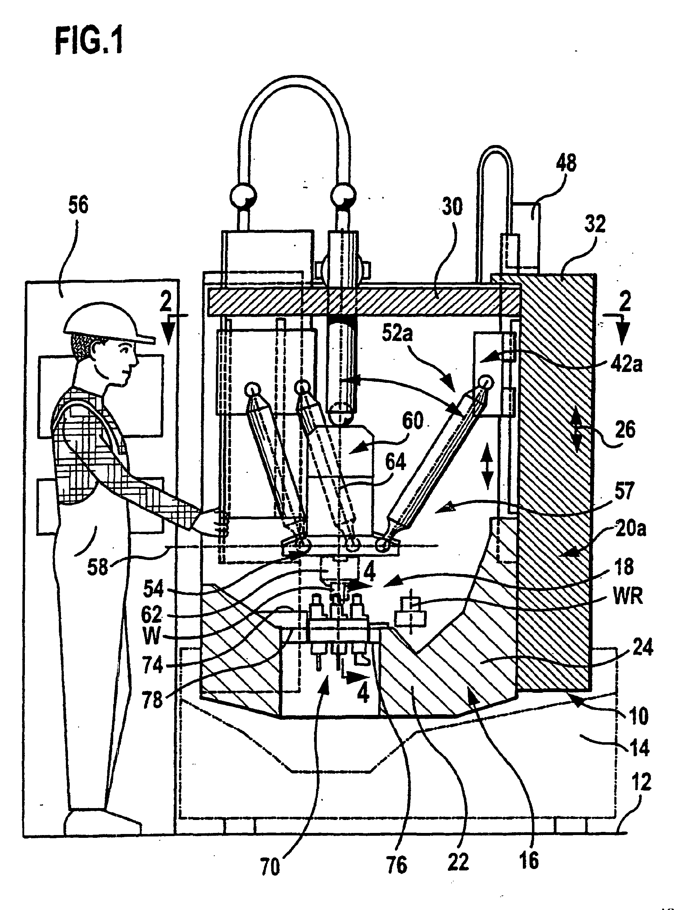

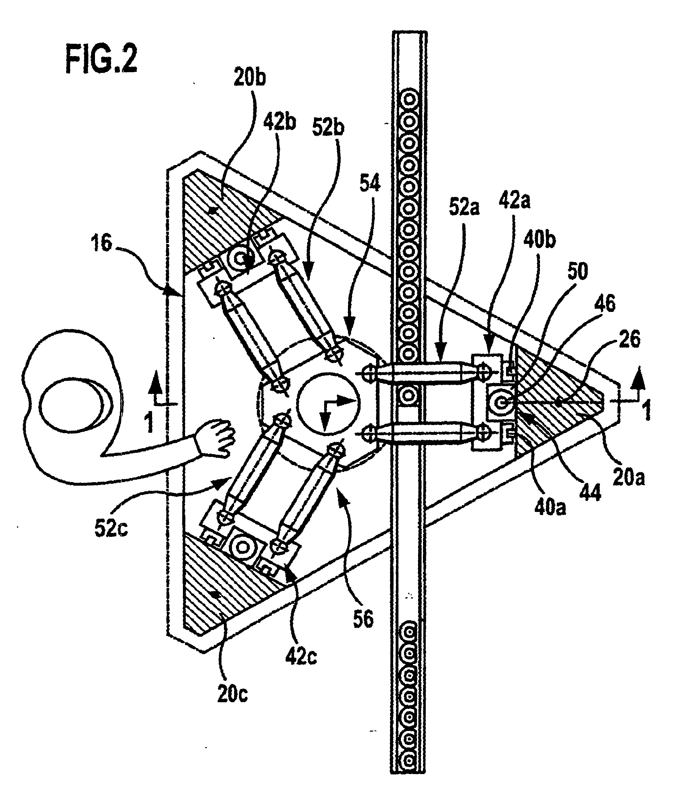

Ein Ausführungsbeispiel einer erfindungsgemäßen Werkzeugmaschine, dargestellt in Fig. 1 und 2 umfaßt ein als Ganzes mit 10 bezeichnetes Maschinengestell mit einem auf einer Grundfläche 12 sitzenden Unterbau 14, welcher einen Grundkörper 16 trägt, der sich auf einer Seite, vorzugsweise unterhalb eines Arbeitsraums 18 zwischen insgesamt drei Trägern 20a, 20b und 20c erstreckt und diese miteinander verbindet.

Vorzugsweise hat dabei der Grundkörper 16 in einer horizontalen Ebene gesehen eine ungefähr dreieckförmige Querschnittsform, wobei die Träger 20a, 20b und 20c in Eckbereichen derselben angeordnet sind.

Zweckmäßigerweise weist der Grundkörper 16 einen Innenbereich 22 auf, an welchen sich eine zu jedem der Träger 20 hin verlaufende Trägeraufnahme 24 anschließt, an welcher der jeweilige Träger 20 gehalten ist.

Jeder der Träger 20 erstreckt sich ausgehend von dem Grundkörper 16 mit einer Längsrichtung 26 parallel zu den Längsrichtungen 26 der jeweils anderen Träger 20 von dem Grundkörper 16 weg ungefähr in vertikaler Richtung bis zu einem Verstrebungselement 30, welches die Träger 20 im Bereich ihrer dem Grundkörper 16 gegenüberliegenden Enden 32 steif miteinander verbindet und außerdem auf einer dem Grundkörper 16 gegenüberliegenden Seite des Arbeitsraums 18 liegt.

Jeder der Träger 20 ist ferner mit zwei parallel zueinander verlaufenden Schlittenführungen 40a, 40b versehen, die sich ebenfalls in der Längsrichtung 26 der jeweiligen Träger erstrecken und zwar vorzugsweise zwischen dem Grundkörper 16 und dem Verstrebungselement 30.

An jeden der Schlittenführungen 40 ist jeweils ein als Ganzes mit 42 bezeichneter Schlitten geführt, der durch einen diesem zugeordneten Linearantrieb 44 antreibbar ist, wobei der Linearantrieb 44 beispielsweise eine Spindel 46 und einen Antriebsmotor 48 umfaßt, welcher im Bereich des Endes 32 des jeweiligen Trägers 20 angeordnet ist und dazu dient, die Spindel 46 durch eine Steuerung gesteuert anzutreiben.

Ferner umfaßt der Linearantrieb 44 noch eine Spindelmutter 50, welche an dem jeweiligen Schlitten 42 fest montiert ist, so daß mittels des Linearantriebs 44 der jeweilige Schlitten gesteuert in einer parallel zur Richtung 26 verlaufenden Stellrichtung positionierbar ist.

An jedem der Schlitten 42 greift eine als Ganzes mit 52 bezeichnete Parallelogrammführung an, wobei über die Parallelogrammführungen 52a, 52b und 52c ein Aufnahmekörper 54 in allen drei Raumrichtungen im Arbeitsraum 18 durch mittels einer Steuerung 56 gesteuertes Bewegen der Schlitten 42a bis 42c längs der entsprechenden Schlittenführungen 40 innerhalb eines Bewegungsraums 57 bewegbar ist, wobei eine Ausrichtebene 58 des Aufnahmekörpers 54 in allen Stellungen des Aufnahmekörpers 54 innerhalb des Bewegungsraums 56 aufrecht erhalten bleibt. Das heißt, daß in jeder Stellung des Aufnahmekörpers 54 die Ausrichtebene 58 parallel zu den Ausrichtebenen 58 in den anderen Stellungen des Aufnahmekörpers 54 verläuft.

Der Aufnahmekörper 54 trägt nun eine als Ganzes mit 60 bezeichnete Werkstückspindel, welche den Aufnahmekörper 64 durchsetzt und auf einer dem Grundkörper 16 zugewandten Seite einen hängend angeordnete Werkstückaufnahme 62 trägt, in welcher ein Werkstück W hängend aufnehmbar und um eine Werkstückspindelachse 64 rotierend antreibbar sowie durch die Steuerung 56 um eine C-Achse drehbar und in allen Darstellungen festlegbar ist.

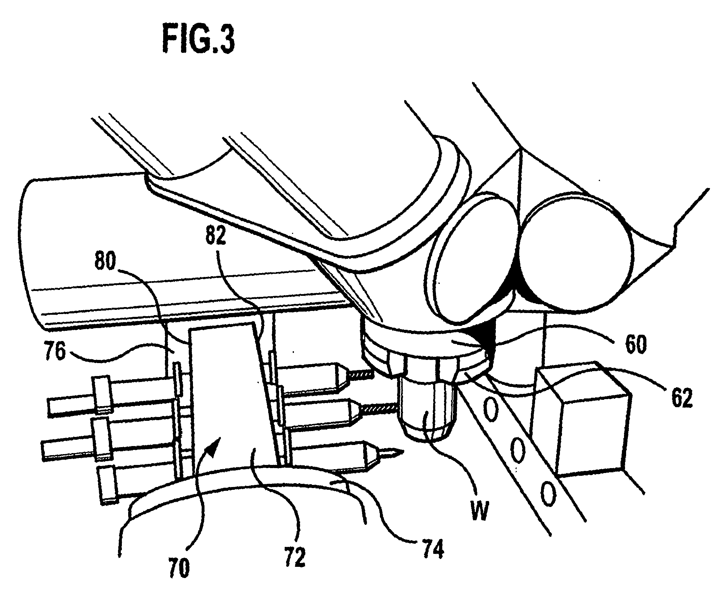

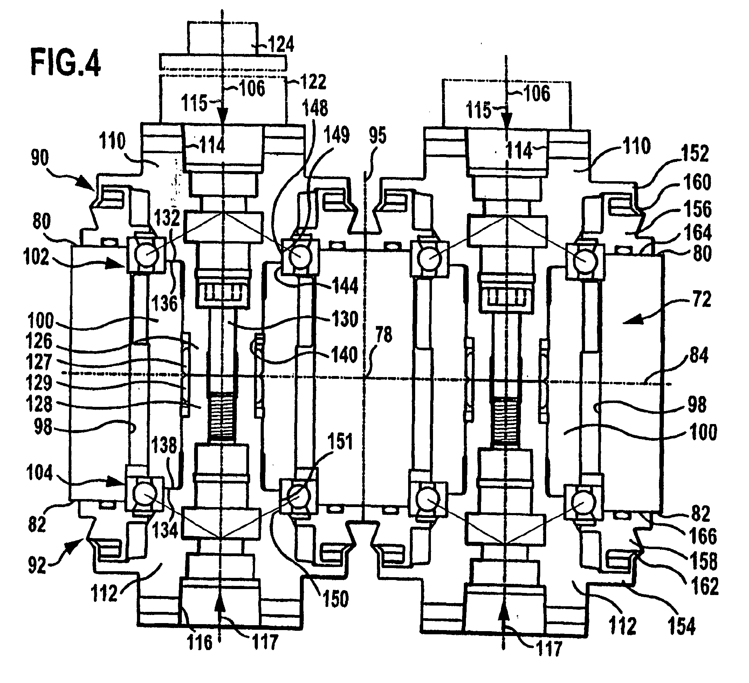

Zur Bearbeitung dieses Werkstücks W ist am Maschinengestell 10, vorzugsweise am Grundkörper 16, ein als Ganzes mit 70 bezeichneter Werkzeugträger vorgesehen, welcher, wie in Fig. 3 und 4 dargestellt, einen Werkzeugträgerkörper 72 aufweist, welcher in einander gegenüberliegenden Lagergehäusen 74 und 76 um eine Schwenkachse 78 schwenkbar gelagert ist.

Der Werkzeugträgerkörper 72 weist dabei zwei einander gegenüberliegende Flachseiten 80 und 82 auf, welche vorzugsweise parallel zueinander und auch parallel zur Schwenkachse 78 verlaufen und insbesondere symmetrisch zu einer Mittelebene 84 liegen, die durch die Schwenkachse 78 hindurch verläuft. (Fig. 3 und 4)

Jede der Flachseiten 80 und 82 weist zwei Reihen 86 und 88 von Werkzeugpositionen 90 bzw. 92 auf, wobei die Reihen 86 und 88 sich mit ihren Längsrichtungen 94 und 96 parallel zueinander und parallel zur Schwenkachse 78 erstrecken.

Vorzugsweise sind die Reihen 86 und 88 symmetrisch zu einer senkrecht zur Mittelebene 84 stehenden Symmetrieebene 95 angeordnet und weisen somit denselben Abstand von dieser auf.

Ferner sind vorteilhafterweise die Werkzeugpositionen 90 der Flachseite 80 bezüglich der Mittelebenen 84 als Spiegelebene spiegelsymmetrisch zu den Werkzeugpositionen 92 der Flachseite 82 angeordnet.

Den jeweils einander bezüglich der Mittelebene 84 gegenüberliegenden Werkzeugpositionen 90 und 92 ist ein Durchbruch 98 zugeordnet, der sich von der Flachseite 80 bis zur Flachseite 82 durch den Werkzeugträgerkörper 72 hindurch erstreckt. In diesem Durchbruch 98 ist eine Spindelhülse 100 mit jeweils endseitig des jeweiligen Durchbruchs 98 angeordneten Spindellagern 102 und 104 um eine mit einer Mittelachse des Durchbruchs 98 zusammenfallenden Spindelachse 106 drehbar gelagert.

Die Spindelhülse 100 weist einen sowohl in Richtung der Flachseite 80 als auch in Richtung der Flachseite 82 offenen Innendurchbruch 101 auf und in diesen ist sowohl von seiten der Flachseite 80 als auch von seiten der Flachseite 82 her ein Spindeleinsatz 110 bzw. 112 einsetzbar, welcher jeweils eine Aufnahme 114 bzw. 116 für ein sogenanntes angetriebenes Werkzeug 120 aufweist, das üblicherweise einen Werkzeughalter 122 umfaßt, der in die Aufnahme 114 bzw. 116 in einer zur Spindelachse 106 parallelen Einsetzrichtung 115 bzw. 117 einsetzbar ist und das eigentliche Bearbeitungswerkzeug 124 trägt.

Die Fixierung der beiden Spindeleinsätze 110 und 112 in der Spindelhülse 100 erfolgt vorzugsweise dadurch, daß diese mit ihren in die Spindelhülse 100 eintauchenden Enden 126 und 128 einander zugewandt in der Spindelhülse 100 sitzen und im Bereich dieser Enden 126 und 128 beispielsweise durch eine Schraube 130 miteinander derart verbindbar sind, daß jeweils Stirnseiten 132 bzw. 134 der Spindelhülse 100 übergreifende Flanschflächen 136 und 138 der Spindeleinsätze 110 bzw. 112 gegen diese Stirnseiten 132 und 134 verspannbar sind.

Ferner erfolgt eine formschlüssige drehfeste Verbindung zwischen der Spindelhülse 100 und den Spindeleinsätzen 110 und 112 durch eine ungefähr in einem mittleren Bereich der Spindelhülse 100 angeordnete Innenverzahnung 140, mit welcher an den Enden 126 und 128 angeordnete Außenverzahnungen 127 bzw. 128 bei den eingesetzten Spindeleinsätzen 110 bzw. 112 in Eingriff stehen.

Vorzugsweise sind die Spindellager 102 und 104 noch so angeordnet, daß sie einerseits die Spindelhülse 100 jeweils endseitig mit Stützflächen 144 und 146 abstützen und außerdem auch noch Stützflächen 148 und 150 aufweisen, welche zusätzlich noch eine radiale Abstützung für die Spindeleinsätze 110 und 112 im Bereich von deren mantelseitigen Stützflächen 149 und 151 bilden.

Zur Abdichtung der Spindellager 102, 104 gegen eindringenden Schmutz ist der jeweilige Spindeleinsatz 110 bzw. 112 mit einer radial außenliegenden ringförmigen Abdeckung 152 bzw. 154 versehen, welche einen auf der entsprechenden Flachseite 80 bzw. 82 sitzenden und den Spindeleinsatz 110 bzw. 112 ringförmig umschließenden Sockel 156 bzw. 158 mit einer Dichtlippe 160 bzw. 162 übergreifen.

Der jeweilige Sockel 156 bzw. 158 sitzt dabei auf einer den jeweiligen Durchbruch 98 umgebenden und in der jeweiligen Flachseite 80 bzw. 92 liegenden Ringfläche 164 bzw. 166 und ist im Bereich dieser Ringfläche mit dem Werkzeugträgergehäuse 72 verbunden. (Fig. 4)

Die Spindelhülsen 100 bilden somit mit jedem der Spindeleinsätze 110 oder 112 eine Spindel 170 für ein angetriebenes Werkzeug 120.

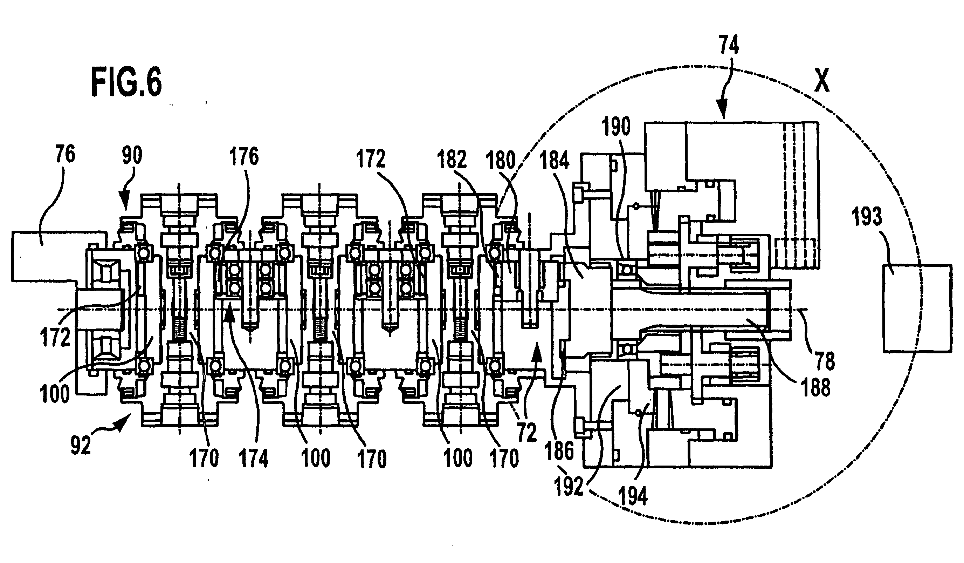

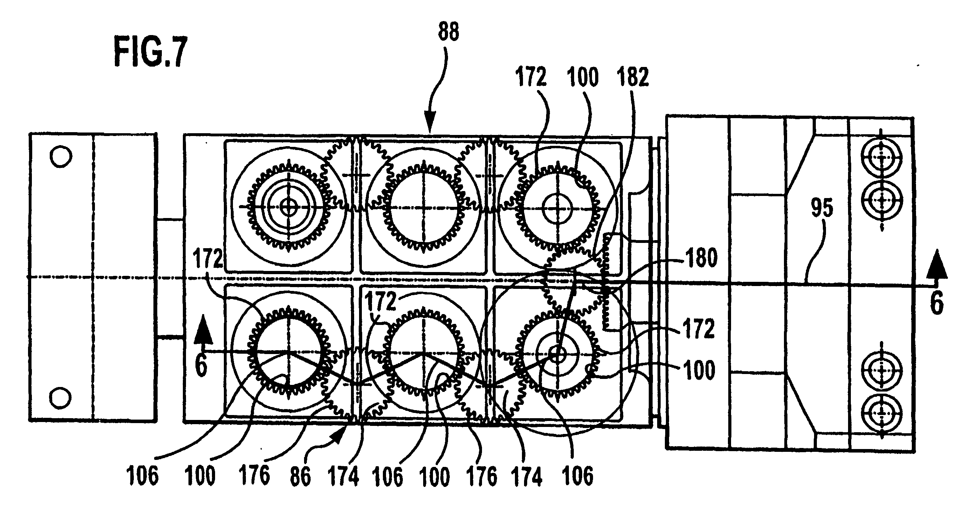

Wie in Fig. 6 und 7 dargestellt, sind die Spindelhülsen 100, die sämtlichen Paaren von Werkzeugpositionen 90 und 92 zugeordnet sind, dadurch antreibbar, daß jede der Spindelhülsen 100 eine Außenverzahnung 172 aufweist, in welche zwischen in der jeweiligen Reihe 86 und 88 aufeinanderfolgenden Spindelhülsen 100 angeordnete Zwischenritzel 174 mit ihren mantelseitigen Außenverzahnungen 176 eingreifen.

Somit sind die in der jeweiligen Reihe 86 oder 88 aufeinanderfolgenden Spindelhülsen 100 gekoppelt und drehen um die jeweiligen Spindelachsen 106 mit derselben Drehrichtung.

Ferner sind bezüglich der Symmetrieebene 95 einander gegenüberliegende Spindelhülsen 100 durch ein Antriebsritzel 180 gekoppelt, dessen mantelseitige Außenverzahnung 182 in die Außenverzahnungen 172 der einander bezüglich der Symmetrieebene 95 gegenüberliegenden Spindelhülsen 100 eingreift.

Außerdem greift in die Außenverzahnung 182 des Antriebsritzels 180 ein Kronrad 184 mit seiner Verzahnung 186 ein, wobei dieses Kronrad 184 auf einer Antriebswelle 188 sitzt, die koaxial zur Schwenkachse 78 verläuft.

Die Antriebswelle 188 ist dabei beispielsweise mit einem Drehlager 190 in einem an den Werkzeugträgerkörper 72 angeformten Antriebskopf 192 gelagert und durch einen Antriebsmotor 193 antreibbar, der vorzugsweise eine durch die Steuerung 56 gesteuerte Drehachse darstellt, die es ermöglicht, die Werkzeugspindeln in beliebige definierte Drehstellungen zu drehen und gegebenenfalls in diesen festzuhalten.

Dieser Antriebskopf 192 ist fest verbunden mit einem Innenring 194 einer dreiteiligen Hirthverzahnung 196, der drehbar in einem Außenring 198 dieser Hirthverzahnung 196 gelagert ist.

Sowohl der Innenring 194 als auch der Außenring 198 weisen dabei in einer Ebene 200 liegende Verzahnungen 202 und 204 auf, mit welchen eine Verzahnung 206 eines Druckrings 208 der Hirthverzahnung in Eingriff bringbar ist, um eine formschlüssige und spielfreie Fixierung des Innenrings 194 relativ zum Außenring 198 zu erreichen.

Der Außenring 198 der dreiteiligen Hirthverzahnung ist fest an dem Lagergehäuse 74 gehalten.

Der Druckring 208 trägt seinerseits einen Kolben 210 der in einer in das Lagergehäuse 44 eingeformten ringförmigen Zylinderkammer 212 unter Ausbildung eines ersten Zylindervolumens 214 und eines zweiten Zylindervolumens 216 auf gegenüberliegenden Seiten des Kolbens 210 angeordnet ist.

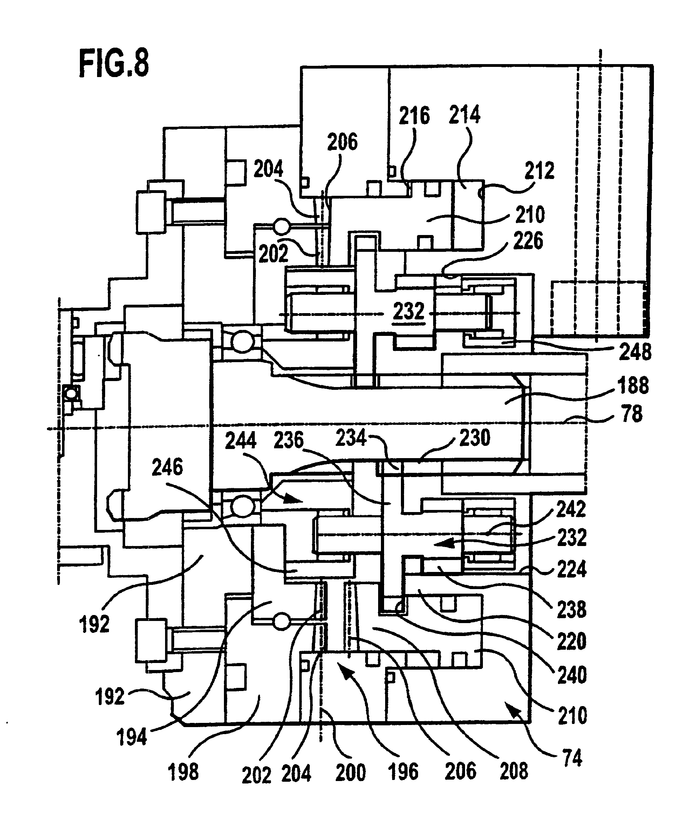

Damit ist der Druckring 208 durch den Kolben 210 zwischen einer vorgeschobenen Stellung, dargestellt in Fig. 8 oben, in welcher die Verzahnung 206 des Druckrings 208 mit den Verzahnungen 202 und 204 in Eingriff ist, und einer zurückgezogenen Stellung, dargestellt in Fig. 8 unten, in welcher die Verzahnung 206 mit den Verzahnungen 202 und 204 außer Eingriff ist, bewegbar, je nach dem ob das Zylindervolumen 214 oder das Zylindervolumen 216 mit einem unter Druck stehenden Medium beaufschlagt ist.

Die Zylinderkammer 212 ist ihrerseits in einem Ringkörper 220 des Lagergehäuses 74 angeordnet, welcher einen zur Schwenkachse 78 koaxial verlaufenden Innendurchbruch 224 aufweist, der mit einer umlaufenden Innenverzahnung 226 versehen ist.

Der Ringkörper 222 mit der im Innendurchbruch 224 ausgebildeten Innenverzahnung 226 bildet dabei ein Hohlrad eines Planetengetriebes, dessen Sonnenrad durch die mit einer Außenverzahnung 230 versehene Antriebswelle 188 gebildet ist.

In diese Außenverzahnung 230 greifen als Ganzes mit 232 bezeichnete Planetenräder mit einem ersten Zahnkranz 234 einer Zahnradscheibe 236 ein, während ein zweiter Zahnkranz 238 der Planetenräder 232, welcher gegenüber dem ersten Zahnkranz 234 axial versetzt ist, in die Innenverzahnung 226 des Ringkörpers 222 eingreift.

Die den ersten Zahnkranz 234 tragende Zahnradscheibe 236 liegt dabei zwischen dem Ringkörper 222 und der Verzahnung 202 und greift in eine Ausnehmung 240 des Druckrings 208 ein, die so ausgebildet ist, daß sie beidseitig der Zahnradscheibe 236 an deren Stirnseiten anliegt, jedoch eine freie Drehbarkeit des ersten Zahnkranzes 234 zuläßt, so daß durch Verschieben des Druckrings 208 die Planetenräder 232 in Richtung ihrer Drehachse 242 verschiebbar sind.

Die Außenverzahnung 230 der Antriebswelle 188 ist dabei so ausgebildet, daß in der vorgeschobenen Stellung des Druckrings 208 die Planetenräder 232 soweit in Richtung der Verzahnung 202 verschoben sind, daß der erste Zahnkranz 234 der Planetenräder 232 außer Eingriff mit der Außenverzahnung 230 ist, während in der zurückgezogenen Stellung des Druckrings 208, in welcher dessen Verzahnung 208 außer Eingriff mit den Verzahnungen 202 und 204 ist, der erste Zahnkranz 234 in die Außenverzahnung 230 eingreift und somit die Antriebswelle 188 in der Lage ist, die Planetenräder 232 anzutreiben, wie in Fig. 8 unten dargestellt.

Ferner sind die Planetenräder 232 in einem drehfest mit dem Antriebskopf 192 verbundenen Planetenradträger 244 um ihre Achse 242 frei drehbar, jedoch in Richtung der Achse 242 verschiebbar gelagert, wobei der Planetenradträger 244 zwei fest miteinander verbundene Trägerringe 246 und 248 umfaßt, in denen eine Lagerung der Planetenräder 232 auf gegenüberliegenden Seiten der Außenverzahnungen 234 und 238 erfolgt.

In der zurückgezogenen Stellung des Druckrings 208 sind die Planetenräder 232 durch die Antriebswelle 288 angetrieben, während die Innenverzahnung 226 des fest mit dem Lagergehäuse 74 verbundenen Ringkörpers 222 feststeht und somit das feststehende Hohlrad bildet.

Damit wandern die Planetenräder 232 um die Antriebswelle 188 herum unter Drehung des Planetenradträgers 244 relativ zum Lagergehäuse 74 in einem feststehenden Untersetzungsverhältnis, so daß ein ein durch den Antriebsmotor 193 getriebenes und die Steuerung 56 gesteuertes Schwenken des Antriebskopfes 192 mitsamt dem Werkzeugträgerkörper 72 um die Schwenkachse 78 in eine durch die Steuerung 56 bestimmbare Drehstellung möglich ist, da in dieser Stellung des Druckrings 208 auch die Verzahnung 206 mit den Verzahnungen 202 und 204 außer Eingriff ist und somit eine Drehbewegung des Antriebskopfes 192 relativ zum Lagergehäuse 74 freigibt.

Ist dagegen der Druckring 208 in seiner vorgeschobenen Stellung, wie in Fig. 8 dargestellt, so greift die Verzahnung 206 in die Verzahnungen 202 und 204 ein und außerdem werden die Planetenräder 232 soweit verschoben daß deren Zahnkranz 234 nicht mehr mit der Außenverzahnung 230 der Antriebswelle 188 in Eingriff ist, so daß in dieser Stellung die Planetenräder 232 nicht angetrieben sind.

Wird in diesem Fall die Antriebswelle 188 durch einen nicht dargestellten Antriebsmotor angetrieben, so erfolgt lediglich ein Antreiben der Spindelhülsen 100 im Werkzeugträger 72, aufgrund der bereits beschriebenen Kopplung derselben mittels der Zwischenräder 174 und der Kopplung zwischen der Antriebswelle 188 und den Spindelhülsen 100 über das Kronrad 184 und das Antriebsritzel 180.

Durch die dreiteilige Hirthverzahnung 196 besteht bei der erfindungsgemäßen Drehmaschine die Möglichkeit, den Werkzeugträgerkörper 72 in einer Vielzahl von Drehstellungen um die Schwenkachse 78 formschlüssig zu positionieren, wobei die Werkstückspindelachse 64 der Werkstückspindel 60 entweder parallel zur Mittelebene 84 oder senkrecht zur Mittelebene 84, das heißt in diesem Fall parallel zur Symmetrieebene 95 oder in Zwischenstellungen relativ zu diesen ausgerichtet sein kann.

Wird beispielsweise der Werkzeugträgerkörper 72 so ausgerichtet, daß die Werkstückspindelachse 64 parallel zur Mittelebene 84 verläuft, und werden die Spindeleinsätze 110 und 112 einer Spindel 100' der Reihe 86 mit angetriebenen Werkzeugen 120' und 120" versehen, wobei das angetriebene Werkzeug 120' beispielsweise das Bearbeitungswerkzeug 124' als Bohrer ausgebildet ist und das Bearbeitungswerkzeug 124" als Schleifscheibe ausgebildet ist, so besteht die Möglichkeit, mit dem Bohrer 124' quer zur Werkstückspindelachse 64 verlaufende Bohrungen B1 im Werkzeug W auszuführen, wobei der Bohrer 124' koaxial zur Spindelachse 106 angeordnet und entsprechend angetrieben ist. Die Ausrichtung des Bohrers 124' zur Werkstückspindelachse 64 entspricht dabei der Ausrichtung A' der Spindelachse 106 zur Werkstückspindelachse 64.

Zum Einbringen der Bohrung B1 ist dabei die Werkstückspindel 60 unter drehfester Festlegung des Werkstücks W bezüglich der Werkstückspindelachse 64 durch eine numerisch gesteuerte C-Achse in Richtung der Spindelachse 106 auf den Bohrer 124' entsprechend dessen Ausrichtung A' zuzubewegen, der dabei durch Antreiben der Spindelhülse 100' in der beschriebenen Art und Weise über die Antriebswelle 188 antreibbar ist.

Es besteht aber auch die Möglichkeit, unter Beibehaltung der Drehstellung des Werkzeugträgerkörpers 72 die Werkstückspindel 60 mit dem Werkstück auf die dem angetriebenen Werkzeug 120' gegenüberliegende Seite zu bringen, um mit dem angetriebenen Werkzeug 120", in diesem Fall der Schleifscheibe 124" eine Mantelfläche des Werkstücks W zu schleifen, wobei ein Antrieb der Schleifscheibe 124" ebenfalls in der beschriebenen Art und Weise durch Antrieb der Spindelhülse 100' erfolgt und die Ausrichtung A" der Schleifscheibe 124" zur Werkstückspindelachse 64 der Ausrichtung der Spindelachse 106 zu dieser entspricht.

Dabei wird das Werkstück W entweder quer zur Richtung der Spindelachse 64 oder in Richtung der Spindelachse 64 auf die Schleifscheibe 124" zubewegt.

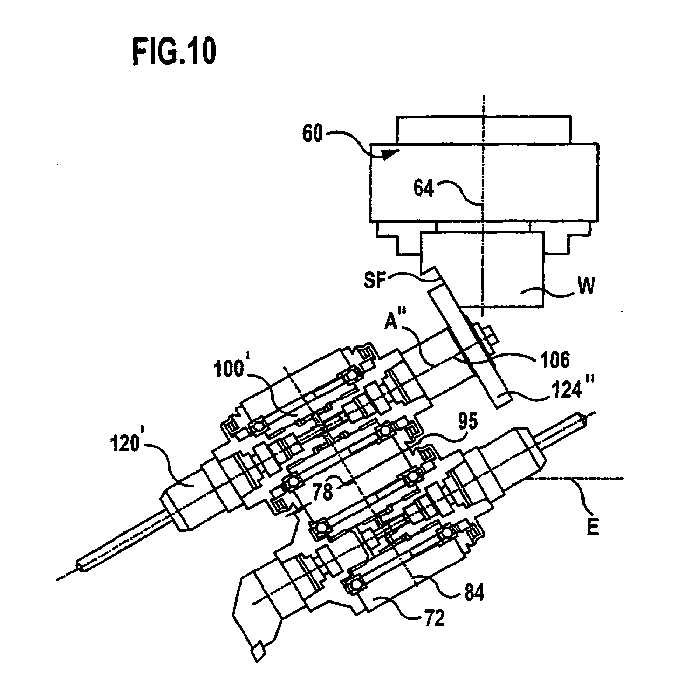

Wie in Fig. 10 dargestellt, besteht aber auch die Möglichkeit, den Werkzeugträgerkörper 72 relativ zur Werkstückspindelachse 64 so zu positionieren, daß sowohl die Mittelebene 84 als auch die Symmetrieebene 95 einen spitzen Winkel mit der Werkstückspindelachse 64 einschließen, so daß mit der Schleifscheibe 124' eine schräg zur Werkstückspindelachse 64 verlaufende Schrägfläche SF am Werkstück W geschliffen werden kann.

Auch in dieser Stellung ist das Werkstück W durch die durch eine Maschinensteuerung 56 gesteuerte C-Achse drehfest bezüglich der Werkstückspindetachse 64 anzuordnen und die Werkstückspindel 64 ist mit einer in Richtung der Spindelachse 106 der Spindelhülse 100 und somit der Ausrichtung A" der Schleifscheibe 124 verlaufenden Vorschubrichtung auf die Schleifscheibe 124" zuzubewegen und außerdem zum Überschleifen des Schrägfläche SF senkrecht zur Spindelachse 106 zu bewegen.

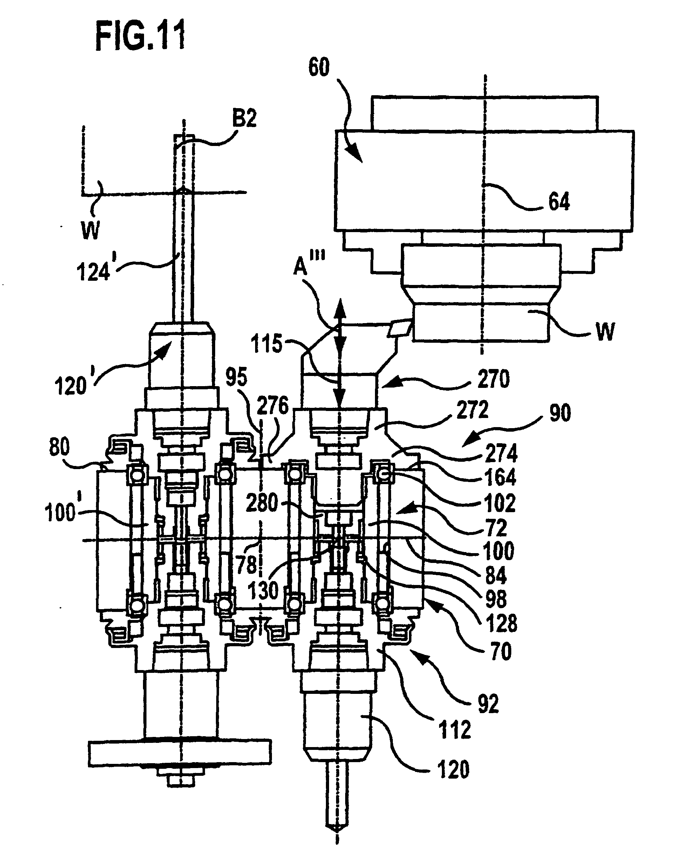

Es besteht aber auch die Möglichkeit, wie in Fig. 11 dargestellt, den Werkzeugträgerkörper 72 so um die Schwenkachse 78 zu schwenken, daß die Mittelebene 84 senkrecht zur Werkstückspindelachse 64 der Werkstückspindel 60 verläuft und folglich die Symmetrieebene 95 parallel zur Spindelachse 64 ausgerichtet ist.

In diesem Fall besteht beispielsweise die Möglichkeit, mit dem eine Ausrichtung A' parallel zur Werkstückspindelachse 64 aufweisenden Bohrer 124' des angetriebenen Werkzeugs 120' stirnseitig des Werkstücks W eine parallel zur Werkstückspindelachse 64 verlaufende Bohrung B2 einzubringen.

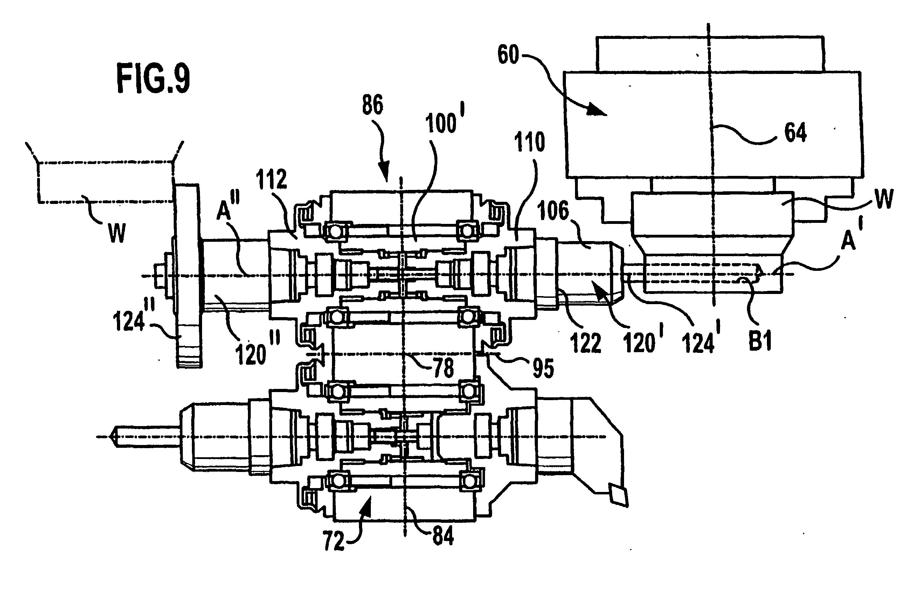

Ferner zeigt ein Vergleich der Fig. 9, 10 und 11, daß durch die Anordnung der Werkzeugpositionen 90 oder 92 im Abstand von der Symmetrieebene 95 die Möglichkeit besteht, den für die Werkstückspindel 60 erforderlichen Weg zum jeweiligen Werkzeug 120 möglichst gering zu halten, wenn ein Wechsel der Drehstellung des Werkzeugträgerkörpers 72 von einer Stellung mit senkrecht zur Spindelachse 64 verlaufender Mittelebene 84 zu einer Stellung mit parallel zur Spindelachse 64 verlaufender Mittelebene 84 oder zu Zwischenstellungen zwischen diesen beiden erfolgt, da die jeweils der Werkstückspindel 60 nächstliegende Reihe 86, 80 von Werkzeugpositionen 90, 92 stets oberhalb einer zur Ausrichtebene 58 parallelen und durch die Schwenkachse 78 verlaufenden Ebene E steht.

Wie in Fig. 11 dargestellt, besteht aber auch die Möglichkeit, bei dem erfindungsgemäßen Werkzeugträger 70 nicht angetriebene Werkzeuge 270 einzusetzen, welche mit einem Werkzeughalter 272 versehen sind, dessen Fuß 274 den jeweiligen Durchbruch 98 mit dem entsprechenden Spindellager, beispielsweise dem Spindellager 102, abdeckend übergreift und dabei mit einem Stützring 276 auf der jeweiligen Flachseite, in diesem Fall der Flachseite 80, im Bereich der Ringfläche 164 durch Aufsetzen in der Einsetzrichtung 115 aufsetzbar und abstützbar ist und auch über den Stützring 276 mit dem Werkzeugträgerkörper 70 fest verbindbar ist.

Ferner ist der Fuß 274 so gestaltet, daß dieser berührungsfrei mit der Spindelhülse 100 verläuft und somit eine freie Drehbarkeit der Spindelhülse 100 zuläßt, so daß in dieser beispielsweise in der gegenüberliegenden Werkzeugposition 92 nach wie vor ein angetriebenes Werkzeug 120 eingesetzt und angetrieben werden kann.

Zum Fixieren des Spindeleinsatzes 112 ist dabei in die Spindelhülse 100 ein Haltekörper 280 einsetzbar, welcher sich auf der Innenverzahnung 140 auf einer dem Ende 128 gegenüberliegenden Seite abstützt und durch das Verbindungselement 130 mit dem Ende 128 verbindbar ist.

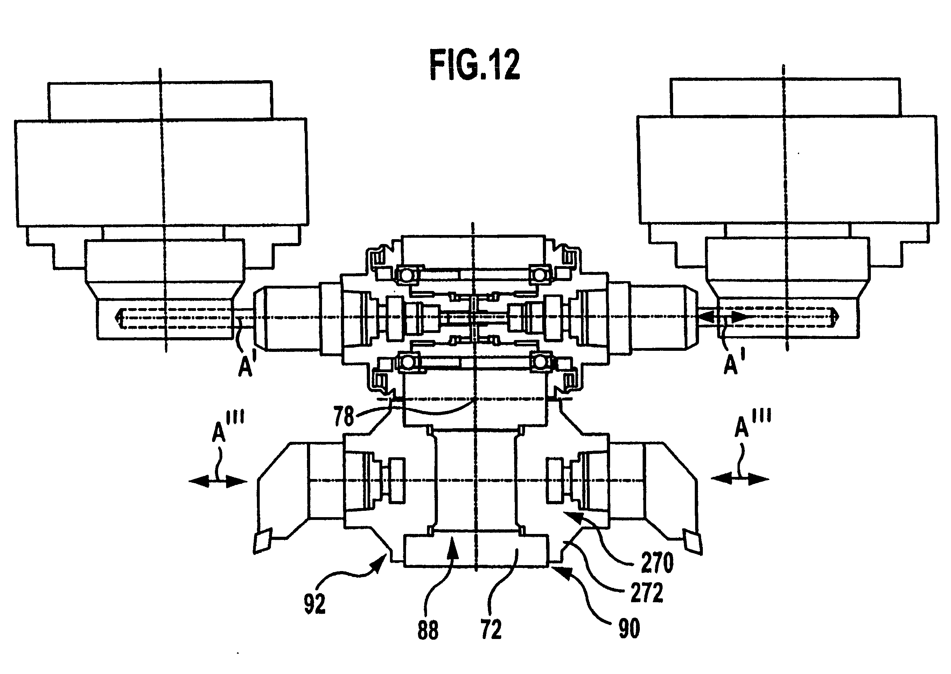

Es ist aber auch denkbar, wie in Fig. 12 dargestellt, beispielsweise bei der Reihe 88 von einander gegenüberliegenden Werkzeugpositionen 90 und 92 auch die Spindelhülse 100 zu entfernen und in diese nicht angetriebene Werkzeuge 270 mit den vorstehend beschriebenen Werkzeughaltern 272 einzusetzen und zu fixieren.

Beispielsweise besteht die Möglichkeit, die Spindelhülse 100 zumindest im Bereich der letzten Werkzeugpositionen 90 und 92 einer der Reihen 86 oder 88 zu entfernen, die auf einer dem Antriebsritzel 188 abgewandten Seite der jeweiligen Reihe 86 oder 88 liegen oder in einer gesamten Reihe 86 oder 88 die Spindelhülsen 100 zu entfernen und diese Reihe lediglich mit nicht angetriebenen Werkzeugen 270 zu bestücken.

Dies schließt auch nicht aus, den gesamten Werkzeugträger 70 lediglich mit nicht angetriebenen Werkzeugen 270 zu bestücken, wobei dabei entweder die Spindelhülsen 100 vorhanden sein können, um gegebenenfalls angetriebene Werkzeuge zu verwenden, wobei in diesem Fall die Spindeleinsätze 110 und/oder 112 einzusetzen sind oder in dem Fall, daß angetriebene Werkzeuge 120 überhaupt nicht eingesetzt werden sollen, die Spindelhülsen 100 nicht in den Werkzeugträgerkörper 72 einzubauen.

Bei allen nicht angetriebenen Werkzeugen 270 ist deren Ausrichtung A"' zur Werkstückspindelachse 64 durch die Schneidengeometrie bestimmt und verläuft vorzugsweise in der durch die Schneidengeometrie vorgegebenen Vorschubrichtung.

Der gemäß der Erfindung ausgebildete Werkzeugträger 70 kann nicht nur bei einer Vertikaldrehmaschine gemäß dem dargestellten Ausführungsbeispiel eingesetzt werden, sondern die Erfindung ist auch bei allen anderen Drehmaschinen einsetzbar.

Insbesondere ist es auch bei der Erfindung nicht notwendig, nur die Werkstückspindel 64 relativ zum am Maschinengestell 10 gehaltenen Werkzeugträger 70 zu bewegen, sondern es ist ebenfalls möglich, die Relativbewegung zwischen Werkstückspindel 64 und Werkzeugträger 70 durch jede Art von Schlitten für die Werkstückspindel 64 und/oder den Werkzeugträger 70 zu realisieren.

## Patentansprüche

1. Werkzeugmaschine umfassend eine Werkstückspindel (60) zur Aufnahme eines Werkstücks (W), einen Werkzeugträger (70), der um eine Schwenkachse (78) schwenkbar ist, die parallel zu einer senkrecht zur Werkstückspindelachse (64) verlaufenden Ebene (58) verläuft, der auf gegenüberliegenden Seiten einer Mittelebene (84) in einer ersten Richtung parallel zur Schwenkachse (78) und in einer zweiten Richtung quer zur Schwenkachse (78) mehrere jeweils in diesen Richtungen aufeinanderfolgend angeordnete Werkzeugpositionen (90, 92) aufweist und der in unterschiedliche Schwenkstellungen bringbar und in diesen festlegbar ist, so daß jedes in einer der Werkzeugpositionen(90, 92) angeordnete Werkzeug (120, 270) sowohl mit parallel zur Werkstückspindelachse (64) als auch in mehreren Zwischenstellungen zwischen einer Ausrichtung parallel zur Werkstückspindelachse (64) und einer Ausrichtung senkrecht zur Werkstückspindelachse (64) stehender Ausrichtung in einer Arbeitsposition zur Bearbeitung des Werkstücks (W) einsetzbar ist, und eine Maschinensteuerung (56), mit welcher die Werkstückspindel (60) und der Werkzeugträger (70) dreidimensional relativ zueinander bewegbar sind und mit welcher das Werkstück (W) um eine Werkstückspindelachse (64) als gesteuerte C-Achse drehpositionierbar ist,
**dadurch gekennzeichnet,**
**daß** jedes der in einer der Werkzeugpositionen (90, 92) angeordnete Werkzeuge (120, 270) auch mit senkrecht zur Werkstückspindelachse stehenden Ausrichtung in einer Arbeitsposition zur Bearbeitung des Werkstücks (W) einsetzbar ist, und daß die Werkstückspindel (60) und der Werkzeugträger (70) so relativ zueinander bewegbar sind, daß bei parallel zur Mittelebene (84) ausgerichteter Werkstückspindelachse (64) unter Beibehaltung der Drehstellung des Werkzeugträgers (70) eine Bearbeitung des Werkstücks mit auf gegenüberliegenden Seiten der Mittelebene (84) in den Werkzeugpositionen (90, 92) angeordneten Werkzeugen (120, 270) durchführbar ist.

2. Werkzeugmaschine nach Anspruch 1, **dadurch gekennzeichnet, daß** die Werkzeuge (120, 270) in den Werkzeugpositionen (90, 92) mit paralleler Ausrichtung zueinander angeordnet sind.

3. Werkzeugmaschine nach einem der voranstehenden Ansprüche, **dadurch gekennzeichnet, daß** in den Werkzeugpositionen (90, 92) Werkzeugaufnahmen (114, 116, 164, 166) vorgesehen sind.

4. Werkzeugmaschine nach einem der voranstehenden Ansprüche, **dadurch gekennzeichnet, daß** die Werkzeugpositionen (90, 92) in einer parallel zur Schwenkachse (78) verlaufenden Fläche (80, 82) angeordnet sind.

5. Werkzeugmaschine nach Anspruch 4, **dadurch gekennzeichnet, daß** die Werkzeugaufnahmen (114, 116, 164, 166) so angeordnet sind, daß die Werkzeuge (120, 270) in alle Werkzeugaufnahmen (114, 116, 164, 166) in einer quer zur Fläche (80, 82) verlaufenden Einsetzrichtung (115, 117) einsetzbar sind.

6. Werkzeugmaschine nach Anspruch 4 oder 5, **dadurch gekennzeichnet, daß** die in die Werkzeugaufnahmen (114, 116, 164, 166) eingesetzten Werkzeuge (120, 270) eine quer zu der Fläche (80, 82) verlaufende Ausrichtung aufweisen.

7. Werkzeugmaschine nach einem der voranstehenden Ansprüche, **dadurch gekennzeichnet, daß** der Werkzeugträger (70) mindestens zwei nebeneinander verlaufende Reihen (86, 88) von Werkzeugpositionen (90, 92) aufweist.

8. Werkzeugmaschine nach Anspruch 7, **dadurch gekennzeichnet, daß** die mindestens zwei Reihen (86, 88) von Werkzeugpositionen (90, 92) in Richtung der Schwenkachse (78) verlaufen.

9. Werkzeugmaschine nach Anspruch 7 oder 8, **dadurch gekennzeichnet, daß** mindestens zwei der Reihen (86, 88) von Werkzeugpositionen parallel zueinander verlaufen.

10. Werkzeugmaschine nach einem der Ansprüche 7 bis 9, **dadurch gekennzeichnet, daß** zwei der Reihen (86, 88) von Werkzeugpositionen (90, 92) seitlich versetzt zu einer durch die Schwenkachse (78) verlaufenden Symmetrieebene (95) angeordnet sind.

11. Werkzeugmaschine nach Anspruch 10, **dadurch gekennzeichnet, daß** zwei der Reihen (86, 88) symmetrisch zu der durch die Schwenkachse (78) verlaufenden Symmetrieebene (95) angeordnet sind.

12. Werkzeugmaschine nach einem der Ansprüche 4 bis 11, **dadurch gekennzeichnet, daß** der Werkzeugträger (70) einen sich in Richtung der Fläche (80, 82) ausdehnenden Werkzeugträgerkörper (72) aufweist und daß auf einer Oberseite des Werkzeugträgerkörpers (72) die Werkzeug-positionen (90, 92) angeordnet sind.

13. Werkzeugmaschine nach Anspruch 12, **dadurch gekennzeichnet, daß** der Werkzeugträgerkörper zwei einander gegenüberliegende Oberseiten (80, 82) aufweist, auf welchen die Werkzeugpositionen (90, 92) vorgesehen sind.

14. Werkzeugmaschine nach Anspruch 13, **dadurch gekennzeichnet, daß** die Werkzeugpositionen (90, 92) auf den beiden gegenüberliegenden Oberseiten (80, 82) des Werkzeugträgerkörpers (72) spiegelsymmetrisch zu einer Mittelebene (84) des Werkzeugträgerkörpers (72) angeordnet sind.

15. Werkzeugmaschine nach einem der voranstehenden Ansprüche, **dadurch gekennzeichnet, daß** zumindest einem Teil der Werkzeugpositionen (90, 92) Werkzeugspindeln (170) als Werkzeugaufnahmen für angetriebene Werkzeuge (120) zugeordnet sind.

16. Werkzeugmaschine nach Anspruch 15, **dadurch gekennzeichnet, daß** die Werkzeugspindeln (170) in Öffnungen (98) des Werkzeugträgerkörpers (72) drehbar gelagerte Spindelhülsen (100) umfassen.

17. Werkzeugmaschine nach Anspruch 16, **dadurch gekennzeichnet, daß** in jede Spindelhülse (100) mindestens von einer Endseite her ein Spindeleinsatz (110, 112) zur Ausbildung einer Werkzeugaufnahme (114, 116) für das angetriebene Werkzeug (120) einer Spindelposition (90, 92) einsetzbar ist.

18. Werkzeugmaschine nach Anspruch 17, **dadurch gekennzeichnet, daß** der Werkzeugträgerkörper (72) diesen von einer Oberseite zur anderen Oberseite durchsetzende Öffnungen (98) mit einer in jeder Öffnung (98) angeordneten Spindelhülse (100) aufweist und daß in jede Spindelhülse (100) von den gegenüberliegenden Endseiten her Spindeleinsätze (110, 112) zur Ausbildung von Werkzeugaufnahmen (114, 116) einsetzbar sind.

19. Werkzeugmaschine nach einem der Ansprüche 15 bis 18, **dadurch gekennzeichnet, daß** die Werkzeugspindeln (170) einer Reihe (86, 88) von Werkzeugpositionen (90, 92) miteinander gekoppelt sind.

20. Werkzeugmaschine nach einem der voranstehenden Ansprüche, **dadurch gekennzeichnet, daß** alle Werkzeugspindeln (170) des Werkzeugträgers (70) miteinander gekoppelt und gemeinsam antreibbar sind.

21. Werkzeugmaschine nach einem der Ansprüche 17 bis 20, **dadurch gekennzeichnet, daß** die Spindelhülsen (100) des Werkzeugträgers (70) durch mindestens ein Antriebselement (174, 180) miteinander gekoppelt sind.

22. Werkzeugmaschine nach einem der Ansprüche 15 bis 21, **dadurch gekennzeichnet, daß** die Werkzeugspindeln (170) über einem außerhalb des Werkzeugträgerkörpers (72) angeordneten Antrieb (193) antreibbar sind.

23. Werkzeugmaschine nach Anspruch 22, **dadurch gekennzeichnet, daß** die Werkzeugspindeln (170) über eine koaxial zur Schwenkachse (78) angeordnete Antriebswelle (188) antreibbar sind.

24. Werkzeugmaschine nach einem der Ansprüche 15 bis 23, **dadurch gekennzeichnet, daß** mit dem Antrieb (193) für die Werkzeugspindeln (170) auch die Schwenkbewegung des Werkzeugträgerkörpers (72) antreibbar ist.

25. Werkzeugmaschine nach einem der voranstehenden Ansprüche, **dadurch gekennzeichnet, daß** der Werkzeugträgerkörper (72) mittels einer formschlüssigen Fixiereinrichtung (196) relativ zu einer Werkzeugträgeraufnahme (74) fixierbar ist.

26. Werkzeugmaschine nach Anspruch 25, **dadurch gekennzeichnet, daß** die Fixiereinrichtung (196) mit einer Kupplung (230, 232) für ein Durchführen der Schwenkbewegung des Werkzeugträgerkörpers (72) mittels des Antriebs (193) für die Werkzeugspindeln (170) gekoppelt ist.

## Claims

1. Machine tool comprising a workpiece spindle (60) for receiving a workpiece (W), a tool carrier (70) pivotable about a pivot axis (78) extending parallel to a plane (58) extending perpendicularly to the workpiece spindle axis (64), the tool carrier having on opposite sides of a centre plane (84) in a first direction parallel to the pivot axis (78) and in a second direction transverse to the pivot axis (78) several tool positions (90, 92) respectively arranged in succession in these directions, and the tool carrier being transferable to different pivoted positions and fixable in these, so that each tool (120, 270) arranged in one of the tool positions (90, 92) is usable in a work position for machining the workpiece (W) both with an orientation extending parallel to the workpiece spindle axis (64) and in several intermediate positions between an orientation extending parallel to the workpiece spindle axis (64) and an orientation extending perpendicularly to the workpiece spindle axis (64), and a machine control (56), with which the workpiece spindle (60) and the tool carrier (70) are movable three-dimensionally relative to each other, and with which the workpiece (W) is rotationally positionable about a workpiece spindle axis (64) as controlled C-axis,
**characterized in that**
each of the tools (120, 270) arranged in one of the tool positions (90, 92) is also usable in a work position for machining the workpiece (W) with an orientation extending perpendicularly to the workpiece spindle axis, and **in that** the workpiece spindle (60) and the tool carrier (70) are movable relative to each other such that a machining of the workpiece is performable with tools (120, 270) arranged on opposite sides of the centre plane (84) in the tool positions (90, 92) with the workpiece spindle axis (64) orientated parallel to the centre plane (84), while maintaining the rotary position of the tool carrier (70).

2. Machine tool in accordance with claim 1, **characterized in that** the tools (120, 270) are arranged in the tool positions (90, 92) with an orientation parallel to one another.

3. Machine tool in accordance with any one of the preceding claims, **characterized in that** tool receptacles (114, 116, 164, 166) are provided in the tool positions (90, 92).

4. Machine tool in accordance with any one of the preceding claims, **characterized in that** the tool positions (90, 92) are arranged in a surface (80, 82) extending parallel to the pivot axis (78).

5. Machine tool in accordance with claim 4, **characterized in that** the tool receptacles (114, 116, 164, 166) are arranged such that the tools (120, 270) are insertable into all tool receptacles (114, 116, 164, 166) in an insertion direction (115, 117) extending transversely to the surface (80, 82).

6. Machine tool in accordance with claim 4 or 5, **characterized in that** the tools (120, 270) inserted in the tool receptacles (114, 116, 164, 166) have an orientation extending transversely to the surface (80, 82).

7. Machine tool in accordance with any one of the preceding claims, **characterized in that** the tool carrier (70) has at least two rows (86, 88), extending alongside each other, of tool positions (90, 92).

8. Machine tool in accordance with claim 7, **characterized in that** the at least two rows (86, 88) of tool positions (90, 92) extend in the direction of the pivot axis (78).

9. Machine tool in accordance with claim 7 or 8, **characterized in that** at least two of the rows (86, 88) of tool positions extend parallel to each other.

10. Machine tool in accordance with any one of claims 7 to 9, **characterized in that** two of the rows (86, 88) of tool positions (90, 92) are arranged in laterally offset relation to a plane of symmetry (95) extending through the pivot axis (78).

11. Machine tool in accordance with claim 10, **characterized in that** two of the rows (86, 88) are arranged symmetrically in relation to the plane of symmetry (95) extending through the pivot axis (78).

12. Machine tool in accordance with any one of claims 4 to 11, **characterized in that** the tool carrier (70) comprises a tool carrier body (72) extending in the direction of the surface (80, 82), and **in that** the tool positions (90, 92) are arranged on a top side of the tool carrier body (72).

13. Machine tool in accordance with claim 12, **characterized in that** the tool carrier body has two opposing top sides (80, 82) on which the tool positions (90, 92) are provided.

14. Machine tool in accordance with claim 13, **characterized in that** the tool positions (90, 92) are arranged on the two opposing top sides (80, 82) of the tool carrier body (72) in mirror-symmetrical relation to a centre plane (84) of the tool carrier body (72).

15. Machine tool in accordance with any one of the preceding claims, **characterized in that** tool spindles (170) as tool receptacles for driven tools (120) are associated with at least some of the tool positions (90, 92).

16. Machine tool in accordance with claim 15, **characterized in that** the tool spindles (170) comprise spindle sleeves (100) rotatably mounted in openings (98) of the tool carrier body (72).

17. Machine tool in accordance with claim 16, **characterized in that** a spindle insert (110, 112) is insertable in each spindle sleeve (100) at least from one end side for formation of a tool receptacle (114, 116) for the driven tool (120) of a spindle position (90, 92).

18. Machine tool in accordance with claim 17, **characterized in that** the tool carrier body (72) has openings (98) extending through the latter from one top side to the other top side thereof, with a spindle sleeve (100) arranged in each opening (98), and **in that** spindle inserts (110, 112) are insertable in each spindle sleeve (100) from the opposite end sides for formation of tool receptacles (114, 116).

19. Machine tool in accordance with any one of claims 15 to 18, **characterized in that** the tool spindles (170) of a row (86, 88) of tool positions (90, 92) are coupled with one another.

20. Machine tool in accordance with any one of the preceding claims, **characterized in that** all tool spindles (170) of the tool carrier (70) are coupled with one another and jointly drivable.

21. Machine tool in accordance with any one of claims 17 to 20, **characterized in that** the spindle sleeves (100) of the tool carrier (70) are coupled with one another by at least one drive element (174, 180).

22. Machine tool in accordance with any one of claims 15 to 21, **characterized in that** the tool spindles (170) are drivable by means of a drive (193) arranged outside of the tool carrier body (72).

23. Machine tool in accordance with claim 22, **characterized in that** the tool spindles (170) are drivable by means of a drive shaft (188) arranged coaxially with the pivot axis (78).

24. Machine tool in accordance with any one of claims 15 to 23, **characterized in that** the pivotal movement of the tool carrier body (72) is also drivable by means of the drive (193) for the tool spindles (170).

25. Machine tool in accordance with any one of the preceding claims, **characterized in that** the tool carrier body (72) is fixable by means of a positively locking fixing device (196) relative to a tool carrier receiver (74).

26. Machine tool in accordance with claim 25, **characterized in that** the fixing device (196) is coupled with a coupling (230, 232) for carrying out the pivotal movement of the tool carrier body (72) by means of the drive (193) for the tool spindles (170).

## Revendications

1. Machine-outil comprenant une broche porte-pièce (60) pour le logement d'une pièce (W), un porte-outil (70), qui peut basculer autour d'un axe de pivotement (78), lequel est agencé parallèlement au plan (58) perpendiculaire à l'axe de la broche porte-pièce (64), qui présente sur des cotés opposés d'un plan médian (84) dans une première direction parallèlement à l'axe de pivotement (78) et dans une seconde direction transversalement à l'axe de pivotement (78) plusieurs positions d'outil (90, 92) disposées successivement respectivement dans ces directions et qui peut être amené dans différentes positions de pivotement et peut être fixé dans ces positions, de sorte que chaque outil (120, 270) disposé dans une des positions d'outil (90, 92) peut être utilisé aussi bien avec une orientation disposée parallèlement à l'axe de la broche porte-pièce (64) que dans plusieurs positions intermédiaires entre celle-ci et une orientation orientée perpendiculairement à l'axe de la broche porte-pièce (64) dans une position de travail pour l'usinage de la pièce (W), et une commande de machine (56), avec laquelle la broche porte-pièce (60) et le porte-outil (70) peuvent être déplacés l'un par rapport à l'autre dans les trois dimensions et avec laquelle la pièce (W) peut être positionnée de façon à pouvoir tourner autour d'un axe de broche porte-pièce (64) comme axe C commandé, **caractérisée en ce que** chacun des outils (120,270) disposés dans une des positions d'outil (90,92) peut être utilisé aussi avec une orientation orientée perpendiculairement à l'axe de la broche porte-pièce (64) dans une position de travail pour l'usinage de la pièce (W) et **en ce que** la broche porte-pièce (60) et le porte-outil (70) peuvent être déplacés l'un par rapport à l'autre de telle sorte que, avec un axe de broche porte-pièce (64) orienté parallèlement au plan médian (84) et en conservant la position de rotation du porte-outil (70), on peut effectuer un usinage de la pièce avec des outils (120, 270) disposés sur des cotés opposés du plan médian (84) dans les positions d'outil (90,92).

2. Machine-outil selon la revendication 1, **caractérisée en ce que** les outils (120, 270) sont disposés dans les positions d'outil (90, 92) avec une orientation parallèle entre elles.

3. Machine-outil selon l'une quelconque des revendications précédentes, **caractérisée en ce que** des logements d'outil (114, 116, 164, 166) sont prévus dans les positions d'outil (90, 92).

4. Machine-outil selon l'une quelconque des revendications précédentes, **caractérisée en ce que** les positions d'outil (90, 92) sont disposées dans une surface (80, 82) agencée parallèlement à l'axe de pivotement (78).

5. Machine-outil selon la revendication 4, **caractérisée en ce que** les logements d'outil (114, 116, 164, 166) sont disposés de telle sorte que les outils (120, 270) peuvent être insérés dans tous les logements d'outil (114, 116, 164, 166) dans un sens d'insertion (115, 117) agencé transversalement à la surface (80, 82).

6. Machine-outil selon la revendication 4 ou 5, **caractérisée en ce que** les outils (120, 270) insérés dans les logements d'outil (114, 116, 164, 166) présentent une orientation agencée transversalement à la surface (80, 82).

7. Machine-outil selon l'une quelconque des revendications précédentes, **caractérisée en ce que** le porte-outil (70) présente au moins deux rangées (86, 88) agencées de façon juxtaposée de positions d'outil (90, 92).

8. Machine-outil selon la revendication 7, **caractérisée en ce que** les au moins deux rangées (86, 88) de positions d'outil (90, 92) sont agencées en direction de l'axe de pivotement (78).

9. Machine-outil selon la revendication 7 ou 8, **caractérisée en ce que** au moins deux des rangées (86, 88) des positions d'outil sont agencées parallèlement entre elles.

10. Machine-outil selon l'une quelconque des revendications 7 à 9, **caractérisée en ce que** deux des rangées (86, 88) des positions d'outil (90, 92) sont disposées décalées sur le coté par rapport à un plan de symétrie (95) passant par l'axe de pivotement (78).

11. Machine-outil selon la revendication 10, **caractérisée en ce que** deux des rangées (86, 88) sont disposées de façon symétrique par rapport au plan de symétrie (95) passant par l'axe de pivotement (78).

12. Machine-outil selon l'une quelconque des revendications 4 à 11, **caractérisée en ce que** le porte-outil (70) présente un corps de porte-outil (72) s'étendant en direction de la surface (80, 82) et **en ce que** les positions d'outil (90, 92) sont disposées sur un côté supérieur du corps du porte-outil (72).

13. Machine-outil selon la revendication 12, **caractérisée en ce que** le corps du porte-outil présente deux côtés supérieurs (80, 82) se faisant face, sur lesquels sont prévues les positions d'outil (90, 92).

14. Machine-outil selon la revendication 13, **caractérisée en ce que** les positions d'outil (90, 92) sont disposées sur les deux côtés supérieurs (80, 82) opposés du corps du porte-outil (72) de façon symétrique par rapport à un plan médian (84) du corps du porte-outil (72).

15. Machine-outil selon l'une quelconque des revendications précédentes, **caractérisée en ce que** les broches d'outil (170) en tant que logements d'outil pour des outils (120) entraînés sont attribuées à au moins une partie des positions d'outil (90, 92).

16. Machine-outil selon la revendication 15, **caractérisée en ce que** les broches d'outil (170) comprennent des douilles de broche (100) logées de façon rotative dans les ouvertures (98) du corps du porte-outil (72).

17. Machine-outil selon la revendication 16, **caractérisée en ce que**, dans chaque douille de broche (100) et au moins par un côté d'extrémité, une insertion de broche (110, 112) peut être insérée pour la réalisation d'un logement d'outil (114, 116) pour l'outil (120) entraîné d'une position de broche (90, 92).

18. Machine-outil selon la revendication 17, **caractérisée en ce que** le corps du porte-outil (72) présente des ouvertures (98) traversant ce corps d'un côté supérieur à l'autre avec une douille de broche (100) disposée dans chaque ouverture (98) et **en ce que** des insertions de broche (110, 112) peuvent être insérées dans chaque douille de broche (100) à partir des côtés extrêmes opposés pour la réalisation de logements d'outil (114, 116).

19. Machine-outil selon l'une quelconque des revendications 15 à 18, **caractérisée en ce que** les broches d'outil (170) d'une rangée (86, 88) de positions d'outil (90, 92) sont couplées entre elles.

20. Machine-outil selon l'une quelconque des revendications précédentes, **caractérisée en ce que** toutes les broches d'outil (170) du porte-outil (70) sont couplées entre elles et peuvent être entraînées conjointement.

21. Machine-outil selon l'une quelconque des revendications 17 à 20, **caractérisée en ce que** les douilles de broche (100) du porte-outil (70) sont couplées entre elles par au moins un élément d'entraînement (174, 180).

22. Machine-outil selon l'une quelconque des revendications 15 à 21, **caractérisée en ce que** les broches d'outil (170) peuvent être entraînées au moyen d'un entraînement (193) disposé à l'extérieur du corps du porte-outil (72).

23. Machine-outil selon la revendication 22, **caractérisée en ce que** les broches d'outil (170) peuvent être entraînées au moyen d'un arbre d'entraînement (188) entraîné sur le même axe que l'axe de pivotement (78).

24. Machine-outil selon l'une quelconque des revendications 15 à 23, **caractérisée en ce qu'**également le mouvement de pivotement du corps du porte-outil (72) peut être entraîné avec l'entraînement (193) pour la broche d'outil (170).

25. Machine-outil selon l'une quelconque des revendications précédentes, **caractérisée en ce que** le corps du porte-outil (72) peut être fixé au moyen d'un système de fixation (196) par complémentarité de forme par rapport à un logement du porte-outil (74).

26. Machine-outil selon la revendication 25, **caractérisée en ce que** le système de fixation (196) est couplé avec un accouplement (230, 232) pour une exécution du mouvement de pivotement du corps du porte-outil (72) au moyen de l'entraînement (193) pour la broche d'outil (170).
